# EUROPEAN PATENT SPECIFICATION

(11) **EP 0 448 080 B1**
(45) Date of publication and mention of the grant of the patent: **26.07.1995**
(21) Application number: 91104343.8
(22) Date of filing: 20.03.1991
(51) Int. Cl.: B65G 45/24

(54) **Self-cleaning thin belt conveyor in painting or dyeing plants**
Selbstreinigender dünner Bandförderer für Lackier- oder Färbeanlage
Convoyeur à bande mince autonettoyant pour l'installation de peinture ou de teinturerie

(30) Priority: 21.03.1990 IT 2087290 U
(43) Date of publication of application: 25.09.1991
(73) Proprietor: CEFLA SOC. COOP. A R.L., I-40026 Imola, Bologna (IT)
(72) Inventor: Raggi, Gianni, I-40026 Imola (BO) (IT)
(74) Representative: Faggioni, Marco, Dr. Ing.

(56) References cited:
- EP-A- 0 266 627
- DE-A- 3 138 755
- DE-U- 8 621 858
- FR-A- 1 177 895
- FR-A- 2 200 171
- GB-A- 957 114
- US-A- 3 469 676
- US-A- 3 815 728
- PATENT ABSTRACTS OF JAPAN, vol. 7, no. 215 (M-244)[1360], 22nd September 1983;& JP-A-58 109 307 (ISHIKAWAJIMA HARIMA JIKOGYO K.K.) 29-06-1983

## Description

The present invention concerns a self-cleaning conveyor and, in particular, a thin belt conveyor for supporting and moving objects to be coated or, generally, treated with liquid substances in automatic plants as, for example, spray painting, dyeing, doping plants, and the like. To make the description simpler, use will however be made hereinafter of the terms "paint" and "painting", broadly referring to a "liquid substance being applied onto a solid body" and, respectively, to a "process for applying said substance over said body".

The problem having to be faced in the aforementioned conveyors mainly involves the smearing of the conveying means, determined by the paint being sprayed which misses the object to be painted - thereby adhering to said means - and cannot be recovered. The smearing of the conveyor and the failure to recover the paint missing the objects to be painted lead to various negative consequences and should hence be eliminated as far as possible.

Among the most important of these consequences, the following should be particularly remembered:
- the drying up of the paint creates obstacles and hinders the regular working of the movable elements of the conveyor;
- the waste of a considerable amount of paint, which may reach even 40-50% of the total amount of paint used;
- the smearing of the objects to be painted, subsequently positioned on the conveyor, by the paint deposited thereon and not yet fully dried up, when the conveyor is not constantly and perfectly cleaned therefrom; and finally,
- the ecological consequences deriving from the elimination of the paint scattered on the conveyor and not recovered; said paint is in fact collected by suitable scrubbing systems and by air suction systems, and can subsequently be found in the waste waters of the first ones and into the filters of the second ones.

The problem of the smearing of conveyors for objects to be painted in automatic spray painting plants has been faced in known technique with three different types of solutions.

According to a first technology, the conveyor surface onto which bear the objects to be painted is reduced to a minimum, so as to minimize the consequences of the smearing and facilitate subsequent cleaning of said surface. The conveying means thus consist of a plurality of metallic or plastic elements (strips, lamellae, wires and the like), mutually spaced and positioned in such a way as to allow conveying the pieces rested thereon.

According to a second technology, the conveying means consist of a conventional type belt conveyor with continuous surface, which is protected from paint smearing by means of paper or cardboard sheets laid thereon during the painting operation. Said protection sheets can either cover the whole conveyor belt, forming an outer ring, or else they can cover only the upper branch thereof and slide over the same starting from a feed roll provided for the purpose; in any case, the sheets used for protection have to be periodically replaced and destroyed.

The third technology provides for the use of considerably thick conveyor belts with continuous surface, formed of steel or of reinforced plastic materials, from which the excess paint is removed by scrapers acting under pressure onto the belt surface.

The first and second aforementioned solutions proposed by known technique show considerable defects and inconveniences. In fact, in the technique adopting a plurality of conveying elements, the smearing of the conveying means is merely reduced, but not eliminated; furthermore, the sprinkled paint dust penetrating into the gaps between said elements, is likely to smear the bottom of the objects being painted, thereby giving rise to rejections or to tiresome manual cleaning operations. In the technique adopting disposable protection sheets, the cleaning of the conveying means is efficiently guaranteed; nonetheless the plant needs to be periodically stopped to replace the protection sheets, and these stops slow down production rythms and limit the automation of the plant.

Moreover, both the above technologies do not provide for any recovery of the scattered paint. Said paint can thus all be found in the waste waters and in the filters of the paint removal systems used in plants of the first type described heretofore, and mostly also on the protection sheets used in plants of the second type. The elimination of said paint requires ecological type precautions which considerably increase the costs of the painting plant, like having to provide for water purifying systems and, possibly, for furnaces to burn the paper sheets smeared with paint.

Also the conveyors constructed according to the third technology suffer from a number of drawbacks. In the first place, they involve considerably higher costs than the previous ones, for what concerns both the actual apparatus and the respective belt. This latter in fact, whether it be made of steel or of plastic material, has a much higher rigidity than the conventional belts - said rigidity being obtained, in plastic belts, by increasing their thickness or by inner reinforcements - so as to improve its resistance to abrasion produced by the cleaning means. To thus prevent the material forming the belt from being subjected to exceedingly high bending stresses, which may lead to possible fatigue failures, it is necessary to provide for transmission drums of larger diameter and thus more costly than those of known conveyors.

Another drawback of the aforementioned third type of conveyors, when use is made of drying paints, derives from the incomplete and irregular removal of said paints due to their high viscosity. The paint removal device - usually consisting of a flexible blade of harmonic steel when the belt is formed of steel, or of a plastic beak-shaped section when the belt is of plastic material - is in fact evidently positioned at a certain distance from the painting area (normally in correspondence of the return branch of the belt), and during the time taken for the belt to cover this distance, the sprayed paint has already lost a considerable amount of solvents, consequently increasing its viscosity and making it difficult to entirely remove it from the belt. For this same reason, the removed paint does not easily drop from the scraping means, which are more or less rapidly covered with paint, making it even worse to remove the paint from the belt. Furthermore, in case of stopping of the plant, the paint accumulated on the scraping means quickly becomes solid, whereby said means are apt to stick onto the belt thus making it indispensable to stop the plant even longer for cleaning.

To try and overcome the above problem - making it thus possible to remove the already partially dried up and thus particularly viscous paints - it is known to increase the pressure of the scraping means onto the belt up to rather high values. This however creates other inconveniences. On one hand, the wear by friction of the belt and of the actual scraping means is in fact strongly accelerated, even when - in order to prevent an irregular wear and thus an irregular cleaning of the belt - an oscillating movement, in a direction transversal to the movement of the belt, is imparted to the scraping means. On the other hand, the friction between the scraping means and the belt determines a considerable waste of energy, with a consequent requirement to oversize the power of the motor driving the belt. A third great inconvenience of conveyor belts with continuous surface - whether of steel or of plastic material - lies in the fact that, both the paint scraping operation and any subsequent washing of the belt with solvents, have to be carried out up to the edge of the belt in order to clean it thoroughly. It is hence inevitable for part of the paint or of the solvent to flow over said edge and spread onto the inner surface of the belt. This is not so serious in itself, but for the fact that it at once causes the irreparable smearing of the belt transmission drums, creating serious problems of the belt sticking onto said drums during stopping of the plant.

The amount of solvent used for cleaning can never in fact - for obvious reasons of costs and pollution - be so high as to fully dissolve and remove the paint by thoroughly washing the two belt surfaces, as it happens instead in the known belt conveyors used for carrying powdery or sticky materials which can anyhow be removed with water. In such cases in fact - as described for example in GB-A-957,114, in FR-A-2.200.171 and in US-A-3,815,728 - the washing can be done with brushes, spray nozzles, and other known systems, which make use of great amounts of washing liquid up to full removal of the smearing substance adhering to the belt, seen that the cost of the washing liquid (substantially consisting of water) is very low, and neither said liquid nor the smearing substance are apt to cause any serious problems of pollution during their elimination, as it happens instead with paints and their solvents.

The object of the present invention is to thus supply a belt conveyor with continuous surface, allowing to fully remove the whole paint deposited on the conveyor belt during the painting operation, without meeting the inconveniences of the similar conveyors proposed by known technique and, in particular, without having to make use of disposable protection sheets which need to be replaced and periodically destroyed, and without having to oversize the belt or the transmission drums, the cost of which is thereby reduced.

Another fundamental object of the present invention is to remove the paint so that it can subsequently be used again in the same painting plant, thereby obtaining a substantial reduction of costs and, at the same time, practically eliminating any problems of pollution.

A further object of the present invention is to finally remove the paint in such a way as to prevent it - both at the natural state and eventually diluted into washing solvents - from smearing the edge of the belt and thus possibly spreading onto its inner surface, thereby avoiding any possible smearing of the transmission drums.

According to the present invention, these objects are reached by means of a self-cleaning belt conveyor for objects to be treated with liquid substances in spray painting or dyeing plants - of the type having a belt with continuous surface, extending between a head drum and a tail drum and carrying said objects across the area where the liquid substance is applied, comprising means to control the axial position of the belt and means to center said belt, both positioned upstream of the head drum in respect of the belt forward direction and comprising furthermore a belt consisting of a thin sheet of non-adherent plastic material having - on its own - an insufficient dimensional stability, means to remove and recover the liquid substance deposited on the belt around the objects being treated, as well as belt cleaning means, both such means being positioned downstream of the spray-painting area, and in that the width of the belt area onto which the liquid substance is applied is smaller than the working width of said means, and this last width is in turn smaller than the width of the belt.

The invention will now be described more in detail hereinafter, with reference to a preferred embodiment thereof in an automatic spray painting plant for wooden panels, illustrated on the accompanying drawings, in which:
Fig. 1 is a diagrammatic side elevation view of the belt conveyor according to the present invention;
Fig. 2 is a diagrammatic plan view of the same conveyor; and
Fig. 3 is a cross section view of the belt conveyor in correspondence of the protection means, along the line III-III of fig. 2.

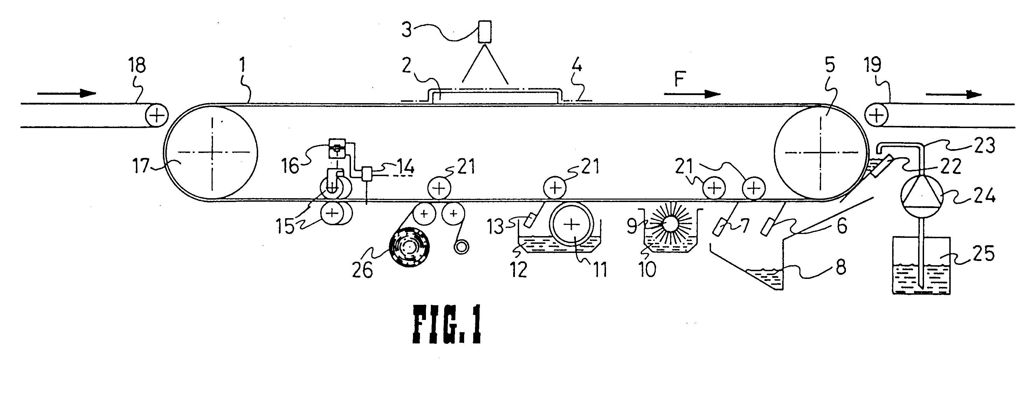

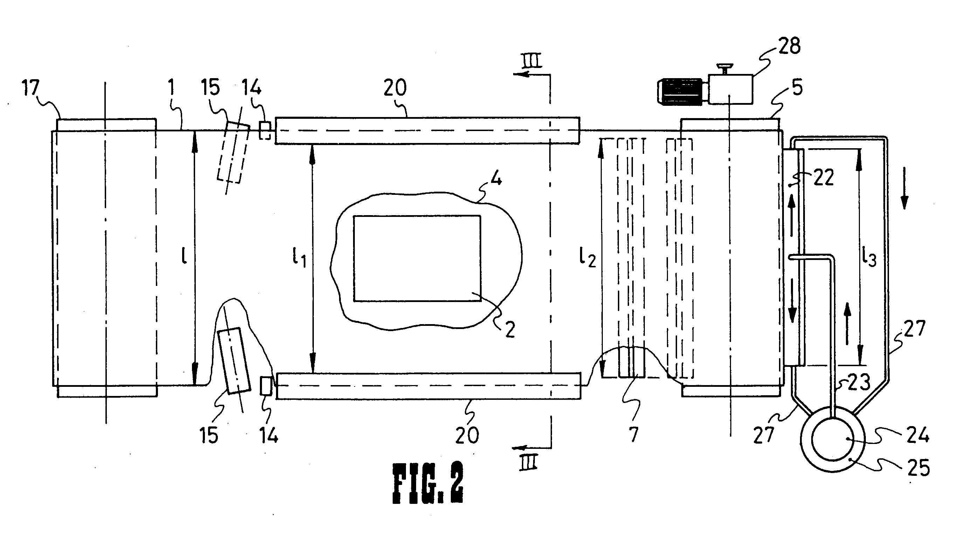

With reference to figs. 1 and 2, the belt conveyor according to the present invention comprises a belt 1 of plastic material moving between two parallel drums, and precisely a head drum 17 and a tail drum 5 with rubber surface driven by motor means 28. The objects 2 to be painted are fed onto the belt 1 by a conveyor 18 and they are collected from said belt, after painting, by a conveyor 19. While being conveyed on the belt 1 the objects 2 are painted by means of spray guns 3, which spray the paint also on an area 4 of the belt 1 surrounding the objects 2.

The belt 1 consists of a thin sheet of plastic material, of low unitary cost, easily found on the market in rolls and apt to be joined into a ring, directly on the conveyor, by adhesive means; said material should have a low adhesion in respect of both oil-based and water-based liquid substances, so as to facilitate removing the layer of said substances deposited on the belt. Suitable materials can be polyester (Mylar) or polytetrafluoroethylene (Teflon), of a thickness such as to keep the cost of the belt to a minimum and to guarantee a high flexibility thereof, while providing an adequate mechanical resistance. A preferred thickness of said belt is for example between 0.1 and 1 mm.

Thanks to the flexibility of the belt 1, the conveying apparatus can be normally sized and, in particular, there is no need to increase the diameter of the drums 5 and 17 compared with those normally adopted in plants wherein the belts are protected by disposable materials; this allows to greatly limit the construction costs of said conveyor in respect of similar prior art conveyors using continuous belts without disposable protection sheets. Furthermore, thanks to the low cost of the material used for the thin and flexible belt of the invention, and to its easy mounting, said belt can be rapidly replaced, without weighing on the costs, any time wear or smearing make it advisable.

Of course, the belt 1 has a very low rigidity and thus an insufficient dimensional stability to guarantee its constant roundness once it has been formed into a ring, taking also into account that said ring is formed on site with the help of adhesive tape, and cannot thus have the same requisites of precision as the conventional very thick belts. Nevertheless, to guarantee the regular working of the conveyor and, in particular, to prevent any side shifting of the belt 1, which would be prejudicial to a proper painting of the objects 2 being treated, there are provided means to control the axial position of said belt, as well as means to center said belt, operated by said control means.

Said control means consist of a pair of pneumatic sensors 14, which detect the lateral position of the edges of the belt 1 in proximity to the head drum 17, and preferably upstream thereof in respect of the belt forward direction indicated by the arrow F. Said centering means consist of two pairs of idle rollers 15, associated to the two sensors 14 and moved by corresponding cylinder-piston units 16, each pair of rollers 15 being arranged "as a gripper" so as to clamp a respective edge of the belt 1. When one of the two sensors 14 detects the presence of the belt 1 (that is, when the belt 1 has shifted sideways in respect of the wanted position), it operates the cylinder-piston unit 16 positioned on the opposite side in respect of the belt 1. This in turn causes the closing of the respective pair of rollers 15, which clamps the moving belt 1 and shifts it sideways back into the correct position. Said shifting is obtained thanks to the fact that the rotation axis of the rollers 15 is slightly oblique in respect of a direction transversal to the belt forward direction, whereby the reaction between said rollers and the belt 1 has a transversal component which actually causes the shifting of said belt. When the belt 1 has returned into the correct position, its edges are no longer detected by any of the sensors 14, whereby both pairs of rollers 15 are in an open position.

By adopting means to control the axial position of the belt and means to center said belt - as described heretofore - use can be made of thin and thus elastic belts. This leads to the already mentioned economical advantages, but also to an increased efficiency in cleaning the belt 1 from the paint deposited thereon in the area 4. The cleaning means in fact comprise two scrapers 6 and 7 which, taking advantage of the elasticity of the belt 1, suitably opposed by idle rollers 21, are apt to thoroughly clean said belt without having to considerably increase the contrast pressure, thereby raising the friction between the scrapers 6 and 7 and the belt 1. Said operation is moreover facilitated by the scarce adhesion of the paint onto the synthetic material forming the belt 1. It should here be noted that the use of means to control the axial position of the belt and centering means, allowing to constantly keep up the lateral position of the belt in belt conveyors, as well as the use of the cleaning means of the belt was already known before the priority date of the present application - as results, for example, from DE-A-3.138.755 - and is hence not claimed herein for itself. From JP-A-58.109.307 it is known to provide a belt conveyor with centering means It is instead deemed both original and innovating to adopt said control and centering means with an extremely thin belt, in order to reach the objects of the present invention.

In fact, the very scarce thickness of said belt - apart from the material forming the same, already known for example from US-A-3,469,676 and from FR-A-1.177.895 - represents an unexpectedly efficient innovation, introduced by the Applicant in opposition to the consolidated technical knowledge in the field, according to which the belt was instead meant to be of great consistency and stiffness, as mentioned in the introductory part of the present description. US-A-3,469,676 discloses also a lateral folding of the belt, to limit the width of the belt covered by the liquid substance applied thereon.

The paint removed by the scrapers 6 and 7 is collected into an underlying vessel 8, from which it is recycled to the painting plant, after dilution and/or filtering. The belt is cleaned from paint residues by a brush 9 rotating in a solvent bath 10 and by a pad 11 rotating in a solvent bath 12. A scraper 13 removes any excess solvent from the belt 1 by dropping it into the bath 12, while the last traces of solvent can be dried up by a cloth roll 26, of the continuous or discontinuous windup type. To increase the efficiency of the belt cleaning operations, further idle contrast rollers 21 can be provided in the various positions where there are means acting against the belt surface, as for example in correspondence of the drum 11, of the scraper 13 or of the cloth roll 26.

In case of drying paints - which may meet the scrapers 6 and 7 in an already partially dried up state, or anyhow with a particularly high viscosity - the conveyor of the present invention is also provided with a doctor device 22, positioned tangentially against the surface of the tail drum 5. In correspondence of the top part of the doctor device 22, solvent is fed from a vessel 25, through a pump 24 and a pipe 23, up to filling the space between said doctor device and the drum 5; the excess solvent is recycled, through two end pipes 27, to the vessel 25. In this way, a continuous film of solvent is applied over the surface of the belt 1, helping to reduce the viscosity and/or to dissolve the paint already partially dried up on the belt 1, and also to lubricate the belt itself, so that paint removal by the scrapers 6 and 7 can easily take place. Furthermore, the paint is thus removed in a sufficiently diluted state, and can easily be recovered by dropping into the vessel 8.

As already mentioned, one of the objects of the present invention is to prevent - while cleaning the belt from the paint deposited thereon - part of the paint, or of the solvents used to facilitate its removal, from reaching the edge of the belt and smearing its inner surface and thus the transmission drums. In the conveyor according to the invention, said object is reached in a fully innovating way in respect of known technique, that is, by carrying out the painting and subsequent belt cleaning operations acting only on a central section of the belt, while leaving untouched two lateral sections thereof, which act as "barriers" to prevent the paint from spreading towards the edge of the belt.

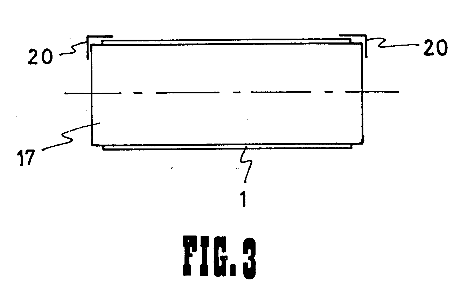

For this purpose, in correspondence of the working area onto which act the spray guns 3, the belt 1 is screened by a pair of stiff lateral protection means 20, covering the belt edges and apt to be removed for cleaning. The protection means 20 are positioned at a very short distance from the belt - as clearly shown in fig. 3 - so as to prevent it from being smeared even only by paint sprinkles. The useful width of the belt in correspondence of the protection means 20, namely the actual width of the belt surface apt to be smeared with paint, hence no longer corresponds to the width l of the belt, but is reduced to a value l₁, where l₁ < l.

The width of the doctor device 22 spreading the solvent over the belt, is instead equal to l₃, where l₃ < l₁, taking into account that the solvent spreads laterally on the belt to a greater or lesser extent depending on its intrinsic characteristics and on those of the paint. The width l₃ of the doctor device 22 is hence reckoned on the basis of these features, so that, once the solvent has been spread, it is not likely to wet a surface wider than that, of width l₁, already covered by the paint.

The width of the belt cleaning means, namely the scrapers 6 and 7, the pad 11 and the scraper 13, is instead equal to l₂, where l > l₂ > l₁. This allows to make sure that, during the paint removal and belt cleaning operations, the means performing these operations are not apt to interfere in any way with the edge of the belt, though providing to fully clean up the working area smeared by the paint. Any slight scatterings of solvent beyond the width l₂ - which should however be considered quite exceptional - shall in any case be fully dried up by the cloth roll 26, which is advantageously of the same width l as the conveyor belt 1.

## Claims

1. Self-cleaning belt conveyor for objects (2) to be treated with liquid substances in spray painting or dyeing plants - of the type having a belt (1) with continuous surface, extending between a head drum (17) and a tail drum (5) and carrying said objects (2) across the area (4) where the liquid substance is applied, comprising means (14) to control the axial position of the belt (1) and means (15) to center said belt (1), both positioned upstream of the head drum (17) in respect of the belt forward direction (F) and comprising furthermore a belt (1) consisting of a thin sheet of non-adherent plastic material having - on its own - an insufficient dimensional stability, means (6, 7) to remove and recover the liquid substance deposited on the belt (1) around the objects (2) being treated, as well as belt cleaning means (9, 11, 13), both such means (6, 7; 9, 11, 13) being positioned downstream of the spray-painting area (4), and in that the width (l₁) of the belt area (4) onto which the liquid substance is applied is smaller than the working width (l₂) of said means (6, 7; 9, 11, 13), and this last width (l₂) is in turn smaller than the width (l) of the belt (1).

2. Conveyor as in claim 1), comprising furthermore a doctor device (22) positioned upstream of the liquid substance removal and recovery means (6, 7), in respect of the belt forward direction, apt to spread over the belt a film of solvent for said substance covering an area of width (l₃) smaller than the width (l₁) of the spray painting area.

3. Conveyor as in claim 1), comprising also a belt drying up device (26) positioned downstream of the cleaning means (9, 11, 13), in respect of the belt forward direction, of width equal to the width (l) of the belt.

4. Conveyor as in claim 1), wherein said plastic material is selected in the group formed by polyester and polytetrafluoroethylene.

5. Conveyor as in claim 1), wherein said sheet of plastic material has a thickness between 0.1 and 1 mm.

6. Conveyor as in claim 1), wherein said liquid substance removal and recovery means consist of scrapers (6,7) acting onto the outer surface of the return branch of the conveyor belt (1) - just downstream of the tail drum (5), in respect of the belt forward direction - in opposition to idle rollers (21) positioned against the inner surface of the belt.

7. Conveyor as in claim 1), wherein said cleaning means comprise in succession, in respect of the belt forward direction: a brush (9) rotating in a solvent bath (10), a pad (11) rotating in a solvent bath (12), and a scraper (13) apt to recover the solvent.

8. Conveyor as in claim 1), wherein the width of the area where said liquid substance is applied is limited, on both sides, by protection means (20) which cover the edges of the belt (1) and are positioned shortly spaced from said belt.

## Patentansprüche

1. Selbstreinigender Bandförderer für Gegenstände (2), die mit flüssigen Substanzen in einer Lackier- oder Färbeanlage zu behandeln sind - mit einem Band (1) mit einer kontinuierlichen Oberfläche, die sich zwischen einer Kopffördertrommel (17) und einer Endfördertrommel (5) erstreckt und die Objekte (2) quer über das Gebiet (4) trägt, wo die flüssige Substanz angewendet wird, der eine Einrichtung (14) zum Steuern der axialen Position des Bands (1) und eine Einrichtung (15) zum Zentrieren des Bands (1) umfaßt, wobei beide stromaufwärts von der Kopffördertrommel (17) in Bezug auf die Bandförderrichtung (F) positioniert sind, und außerdem ein Band (1), das aus einer dünnen Fläche aus einem nichthaftenden Kunststoffmaterial besteht, das - alleine - eine ungenügende Maßbeständigkeit aufweist, Einrichtungen (6, 7), um die auf dem Band (1) um die zu behandelnden Gegenstände (2) herum abgesetzte flüssige Substanz zu entfernen und rückzugewinnen, sowie Bandreinigungseinrichtungen (9, 11, 13) umfaßt, wobei die beiden Einrichtungen (6, 7; 9, 11, 13) stromabwärts von dem Lackiergebiet (4) positioniert sind, und die Breite (l₁) des Bandgebiets (4), auf dem die flüssige Substanz angewendet wird, kleiner als die Arbeitsbreite (l₂) der Einrichtungen (6, 7; 9, 11, 13) ist und diese letztere Breite (l₂) wiederum kleiner als die Breite (l) des Bands (1) ist.

2. Bandförderer wie in Anspruch 1, der außerdem eine Abstreifeinrichtung (22) umfaßt, die stromaufwärts von den Flüssigkeitsentfern- und Rückgewinnungseinrichtungen (6, 7) in Bezug auf die Bandförderrichtung positioniert ist und gestaltet ist, um über das Band einen Film aus Lösungsmittel für die Substanz zu sprühen, der ein Gebiet mit einer Breite (l₃) bedeckt, die kleiner als die Breite (l₁) des Lackiergebiets ist.

3. Bandförderer wie in Anspruch 1, der auch eine Bandtrockeneinrichtung (26) umfaßt, die stromabwärts von den Reinigungseinrichtungen (9, 11, 13) in Bezug auf die Bandförderrichtung angeordnet ist und eine Breite aufweist, die der Breite (l) des Bands entspricht.

4. Bandförderer wie in Anspruch 1, worin das Kunststoffmaterial aus der von Polyester und Polytetrafluoräthylen gebildeten Gruppe ausgewählt ist.

5. Bandförderer wie in Anspruch 1, worin die Fläche aus Kunststoffmaterial eine Dicke zwischen 0,1 und 1 mm aufweist.

6. Bandförderer wie in Anspruch 1, worin die Flüssigkeitsentfern- und Rückgewinneinrichtungen aus Abschabern (6, 7) bestehen, die auf der äußeren Oberfläche des Rückführbereichs des Bandförderers (1) - genau stromabwärts von der Endfördertrommel (5) in Bezug auf die Bandförderrichtung - gegenüber von den losen Rollen (21) wirken, die gegen die innere Oberfläche des Bands positioniert sind.

7. Bandförderer wie in Anspruch 1, worin die Reinigungseinrichtungen in Bezug auf die Bandförderrichtung hintereinander umfassen: eine Bürste (9), die sich in einem Lösungsmittelbad (10) dreht, ein Polster (11), das sich in einem Lösungsmittelbad (12) dreht, und einen Abschaber (13), der gestaltet ist, um das Lösungsmittel rückzugewinnen.

8. Bandförderer wie in Anspruch 1, worin die Breite des Gebiets, wo die flüssige Substanz angewendet wird, an beiden Seiten von Schutzeinrichtungen (20) begrenzt wird, die die Kanten des Bands (1) bedecken und kurz beabstandet von dem Band positioniert sind.

## Revendications

1. Transporteur à bande autonettoyant pour des objets (2) à traiter avec des substances liquides dans des installations de peinture par pulvérisation ou de teinture - du type comportant une bande (1) à surface continue, s'étendant entre un tambour avant (17) et un tambour arrière (5) et supportant lesdits objets (2) à travers la zone (4) où la substance liquide est appliquée, comprenant un moyen (14) pour commander la position axiale de la bande (1) et un moyen (15) pour centrer ladite bande (1), les deux moyens étant positionnés en amont du tambour avant (17) relativement à la direction avant (F) de la bande, et comprenant en outre une bande (1) consistant en une mince feuille de matière plastique de faible adhésivité ayant - par nature - une stabilité dimensionnelle insuffisante, un moyen (6, 7) pour enlever et récupérer la substance liquide déposée sur la bande (1) autour des objets (2) étant traités, ainsi qu'un moyen de nettoyage de bande (9, 11, 13), lesdits deux moyens (6, 7; 9, 11, 13), étant positionnés en aval de la zone de peinture par pulvérisation (4), et la largeur (l₁) de la zone (4) de la bande sur laquelle la substance liquide est appliquée étant inférieure à la largeur d'intervention (l₂) desdits moyens (6, 7; 9, 11, 13), et cette dernière largeur (l₂) étant à son tour inférieure à la largeur (l) de la bande (1).

2. Transporteur selon la revendication 1, comprenant en outre une lame docteur (22) positionnée en amont du moyen d'enlèvement et de récupération de substance liquide (6, 7), relativement à la direction avant de la bande, adapté à répandre sur la bande un film de solvant dur ladite substance sur une zone d'une largeur (l₃) inférieure à la largeur (l₁) de la zone de peinture, par pulvérisation.

3. Transporteur selon la revendication 1, comprenant également un dispositif de séchage de bande (26) positionné en aval du moyen de nettoyage (9, 11, 13), relativement à la direction avant de la bande, d'une largeur égale à la largeur (l) de la bande.

4. Transporteur selon la revendication 1, dans lequel ladite matière plastique est sélectionnée parmi le groupe formé par le polyester et le polytétrafluoréthylène.

5. Transporteur selon la revendication 1, dans lequel ladite feuille de matière plastique a une épaisseur comprise entre 0,1 mm et 1 mm.

6. Transporteur selon la revendication 1, dans lequel ledit moyen d'enlèvement et de récupération de substance liquide consiste en raclettes (6, 7) agissant sur la surface externe de la longueur de retour de la bande (1) - juste en aval du tambour arrière (5) relativement à la direction avant de la bande - en opposition à des galets-tendeurs (21) positionnés contre la surface interne de la bande (1).

7. Transporteur selon la revendication 1, dans lequel ledit moyen de nettoyage comprend successivement, relativement à la direction avant de la bande, une brosse (9) tournant dans un bain de solvant (10), un tampon (11) tournant dans un bain de solvant (12), et une raclette (13) adaptée à récupérer le solvant.

8. Transporteur selon la revendication 1, dans lequel la largeur de la zone où ladite substance liquide est appliquée est limitée, des deux côtés, par des moyens de protection (20) qui recouvrent les bords de la bande (1) et sont positionnés à une courte distance de ladite bande.
